# EUROPEAN PATENT APPLICATION

(11) **EP 1 119 191 A2**
(43) Date of publication of application: **25.07.2001**
(21) Application number: 00311196.0
(22) Date of filing: 14.12.2000
(51) Int. Cl.: H04N 5/44

(54) **Television control and audio module**

(30) Priority: 29.12.1999 US 474451
(71) Applicant: Texas Instruments Incorporated, Dallas, Texas 75251 (US)
(72) Inventor: Maruthachalam, Natarajan, Sherman, Texas 75092 (US); Breithaupt, William R., Sherman, Texas 75090 (US); Qualls, Casey A., Dension, Texas 75020 (US)
(74) Representative: Potter, Julian Mark

(57) **Abstract**

The present invention is a device and method for providing remote data and audio output to a user of a remote control device. The invention incorporates a transceiver 410 to provide two-way communications and control between the user and a consumer electronic device 420 and has a speaker 415 for reproducing sound and a display for data. The method receives a signal from a consumer electronic device across an air interface, and reproduces a sound and/or a data display at the remote control device.

## Description

The present invention relates generally to remote control devices, and more specifically, but not exclusively, to remote control devices that to control at least an audio setting in a consumer electronic device.

Since the early days of consumer electronic devices, including devices such as televisions (TVs), stereos, video set recorders (VCRs), and compact disk (CD) players, users of the consumer electronic devices (the devices) have sought ways to more conveniently adjust user settings of the devices. Remote control devices (or "remote controls") provide users the ability to remotely change device settings, such as a channel of reception, volume, the brightness of a television picture, the contrast of the television picture, or a variety of other device settings. Providing more than just convenience, the ability to remotely modify unit settings is especially important for the elderly, the disabled, and persons who are being hospitalized.

Most remote controls communicate with a consumer electronic device by using infrared signals, or alternatively, specific radio channels or frequencies. Accordingly, remote controls have within them a transmitter that can send a transmission to one or more devices. In addition, remote controls typically maintain a memory for storing channel settings, as well as an input keypad for receiving user commands. Likewise, consumer electronic devices contain a receiver that detects the remote control's transmission. Accordingly, if the transmission is identified as one that is intended for that device, the device converts the received transmission into a control signal that is evaluated by an internal processing device. Then, the internal processing device commands appropriate sub-components to modify user settings.

In addition to a keypad, a remote control may interface with the user through a variety of other mechanisms. For example, some keypads provide simple toggle switches to provide user control, and more expensive remote controls may incorporate a track ball. To facilitate use in dark environments, some remote controls are back-lit, while others glow in the dark.

Additionally, remote control devices may display an output. For example, a remote control may allow the user to see what he or she is entering into the remote control through a liquid crystal display (LCD).

The speakers which provide an audio output for most consumer electronic devices, such as televisions, are typically located in or around the consumer electronic device, such as the picture tube chassis in a television. Accordingly, the sound from a television is broadcast across the room from the person viewing the television. When other persons within proximity of the television (or other consumer electronic device) are trying to sleep, study, read, or just do not want to hear the television, the TV viewer faces a dilemma. The TV viewer must either turn the volume down low enough not to disturb other, which makes it difficult for the TV viewer to hear the television, or alternatively, the TV viewer may play the TV at a volume level that he can hear but which also disturbs those persons within proximity of the television.

Remote controls that operate at an infrared frequency must be within the line of sight of the consumer electronic device that they are controlling. Thus, if a user wishes to alter the user settings of a consumer electronic device when he or she is in a different room or in an area where the device is out of the line of sight of the remote control, the user settings cannot be adjusted. The applicant has realised that it would be advantageous to have a device and method that would enable a television viewer (or another user of a consumer electronic device) to remotely listen to the audio output of a television without disturbing others, while simultaneously providing that user with control over user settings such as the audio output and video display functions.

Viewed from one aspect, the present invention achieves technical advantages as devices and methods that provide remote audio output to a user of a remote control device, such as a handheld remote control device. The device uses a transceiver to provide two-way communications between a user and a consumer electronic device, and also uses a high quality speaker for producing an audio output. The method generally receives a signal from a consumer electronic device, and then produces a sound at the remote control device. An embodiment of the present invention provides numerous advantages over the prior art. For example, the two-way channel of an embodiment of the present invention provides the ability for the remote control to display user settings. In addition, the broadcasting of an audio output remotely from the consumer electronic device allows the volume of the audio output to be customized so that only the remote listeners who wish to hear the audio output will be able to hear the audio output. Furthermore, an embodiment of the present invention can be adapted to provide two-way control of other devices and systems, for example, security systems, climate control systems, as well as telephone and home intercom systems.

In one embodiment the present invention is a remote control device that allows a user to adjust user settings while allowing the user to remotely listen to sounds. The user device generally comprises a user interface, a microcontroller coupled to the user interface, a transceiver coupled to the microcontroller, the receiver is communicable with a consumer electronic device, and an audio amplifier.

The microcontroller may be a digital signal processor (DSP) or other computer processing device. The transceiver may operate at a radio frequency, such as a frequency within the band width of approximately 860 MHz to 999 MHz, or other frequency depending on the requirement for regulation of the country of operation, or the transceiver may operate within an infrared frequency. In addition, the transceiver may be configured to receive a two-channel stereo signal or a four-channel stereo signal.

The user interface in the preferred embodiment is a keypad. However, other user interfaces such as a voice-recognition system, or a graphical user interface (GUI) having a touch-screen are also available.

To reproduce sound, the audio amplifier is coupled to a headphone jack or a plurality of headphone jacks, as well as a speaker, such as a high quality heavy magnet speaker which is built into the remote control device. Likewise, video output may be provided to a user through a liquid crystal display (LCD) screen, or a portable television video display. In addition, the user may broadcast his or her voice through the consumer electronic device through a microphone which could be incorporated into the remote control device.

In another embodiment of the present invention is a method of providing remote listening from a remote control device. The method comprises the steps of transmitting a first signal from a consumer electronic device to the remote control device. Then the remote control device processes an audio component in the first signal. Next, an audio output is broadcast from the remote control device.

Other aspects of the invention, including alternative embodiments, are understood by reference to the following detailed description of preferred embodiments, provided by way of example only, and which can be better understood by reference to the drawings, in which:
Figure 1 illustrates a front view of one remote control device (remote control) that incorporates aspects of the present invention;
Figure 2 illustrates some of the electrical components that may be included in a preferred embodiment of the present invention;
Figure 3 illustrates a remote control with 2-way data and voice/audio in radio communication with a first television, a second television, and a third television with various other systems including an intercom, phone, security, Personal Computer, Heating Ventilation and Air Conditioning (HVAC), lights;
Figure 4 illustrates a noncompatible television, a noncompatible stereo, and a noncompatible CD player configured to communicate with an embodiment of the invention;
Figure 5 illustrates a block flow diagram of one method of implementing an embodiment of the present invention as a remote reception algorithm; and
Figure 6 provides a logic flow diagram of an incoming call algorithm.

An embodiment of the present invention provides the ability to remotely listen to an audio signal sent from a consumer electronic device, such as a television. In addition, an embodiment of the invention provides a user the ability to monitor user settings at the remote control device, rather than from the device being controlled. Generally, embodiments of the invention relate to devices and methods for providing remote audio output to a user of a remote control device. The device includes a transceiver to provide two-way voice or data communications between the user and a consumer electronic device, and has a speaker for reproducing a sound. The method generally receives a signal from a consumer electronic device, and then produces a sound at the remote control device. A remote control device that is configured according to an embodiment of the invention may take on any number of appearances.

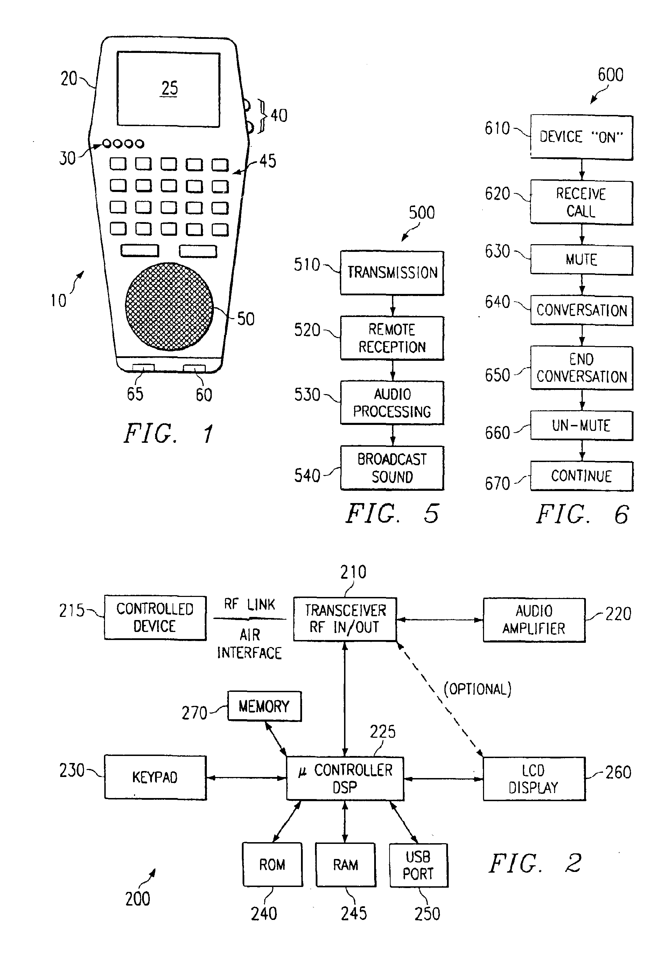

Figure 1 provides a front view one remote control device (remote control)
that incorporates aspects of the present invention. A remote control 10 has a housing 20, which could be any rigid material such as plastic or metal, for example. The rigid housing 20 provides structural support for several of the components of the remote control 10. For example, the liquid crystal display (LCD) monitor 25 provides a user of the remote control 10 with visual feedback from a consumer electronic device (not shown). The LCD monitor 25 could display information, or even a video display. Furthermore, although an LCD monitor 25 is shown in Figure 1, other video displays couldbe incorporated within the remote control device including video displays capable of displaying a television transmission.

Also providing visual feedback to the user is a row of light emitting diodes (LEDs) 30. LEDs can be used to provide the user with a variety of information, such as information regarding which consumer electronic device the remote control 10 is communicating with, information regarding what type of system the remote control device is controlling, or whether or not the remote control device is either sending a transmission, receiving a transmission, or both receiving and sending a transmission simultaneously. Furthermore, it should be noted that although four LEDs are shown in Figure 1, any number of LEDs could be incorporated within a remote control device.

Also shown in Figure 1 are a plurality of audio output headphone jacks (headphone jacks) 40. Although the headphone jacks 40 are called headphone jacks, other audio output devices, such as simple speakers, could be connected to the headphone jacks 40. Furthermore, the headphone jacks may provide for independent stereo transmission through each headphone jack 40, or alternatively, each headphone jack may carry a separate channel. Furthermore, infrared audio outputs could be provided so that a wireless remote listening device could be used by the user.

The remote control 10 has a user interface 45, which is illustrated in Figure 1 as being a keypad. The keypad 45 will typically have the appearance of a telephone keypad so that a user may directly enter a channel to be viewed, or a channel to be listened to on a stereo, and have access to other consumer electronic device functions. However, other types of user interfaces are contemplated as being within the scope of the present invention. For example, a user interface could be a voice-recognition system. Alternatively, the user interface 45 could be a graphical user interface (GUI) having a touch-screen provided for user interaction. The touch-screen could be in addition to or an alternative to the LCD monitor 25.

Furthermore, a speaker 50 is provided in the remote control 10 in order to facilitate an audio output to the user. The speaker 50 could be any common speaker capable of producing an audio output, and in the preferred embodiment a high quality speaker, such as a heavy magnet speaker, is preferred. The speaker 50 is what provides the remote control 10 the ability to listen to an audio output from a consumer electronic device from the remote control 10. Accordingly, when the user is away from the consumer electronic device, the user may still listen to an audio output generated by the consumer electronic device when the user has the remote control 10 with him.

Shown at the bottom of the housing 20 is a power input 60 which attaches to a power cord in order to recharge a battery within the remote control device 10. Likewise, at the bottom of the housing 20, is a microphone 65. The microphone 65 provides a user the ability to use the remote control 10 as a voice transmitter which could broadcast the user's voice through the consumer electronic device, such as a television, phone or intercom or within another speaker within another system which has been coupled to the remote control device 10.

Figure 2 illustrates some of the electrical components that may be included in the preferred embodiment of the present invention. The remote control device 200 of Figure 2 is illustrated as comprising a plurality of electronic devices and subcomponents illustrated as blocks which communicate with each other across wire lines or buses which are illustrated generally as two-headed arrows. Two-way communication is provided to the remote control via a transceiver 210 which may send or receive radio frequency (RF) transmissions over an RF link across an air interface with a control device 215, which could be a television (TV). The RF link is illustrated as a lightning bolt between the control device 215 and the transceiver 210. The transceiver will receive an audio signal from the control device 215 and pass the audio signal onto an audio amplifier 220. The audio amplifier will then be coupled to an audio output, such as a headphone jack or a speaker. The transceiver 210 also receives command and control communications from the control device 215. These command and control communications are sent to a microcontroller 225. The microcontroller in Figure 2 is illustrated as a digital signal processor (DSP) ; however, the microcontroller could also be a computer processor, or any other type of computer circuit logic that enables a user to remotely listen to an audio output through the remote control 200. The DSP could provide an encryption capability to provide security communication when required.

Microcontroller 225 communicates with the audio amplifier 220 in order to control audio amplifier functions, such as the gain of the audio amplifier 220 (which controls sound volume), as well as other functions of the audio amplifier 220. The microcontroller 225 is also in communication with the LCD 260 so that the LCD 260 may display user preferences. Optionally, the LCD 260 may be in communication with the transceiver 210 when receiving a video input so that the LCD 260 may display a video output. The optionality of this connection is illustrated by the dashed line having two arrowheads. In addition, the microcontroller 225 communicates with a memory 270 which stores information such as preferred channel settings, preferred user preferences, in various programs used to implement remote control 200 functions. The microcontroller 225 is also in communication with a user interface, which for the remote control 200 of Figure 2 is shown to be a keypad 230.

In addition to the memory 270, the microcontroller 225 is in communication with a read only memory (ROM) 240 as well as a random access memory (RAM) 245. The ROM 240 and the RAM 245 perform microcontroller 225 support functions, as is well known in the art. Furthermore, the microcontroller 225 is in communication with a universal synchronous bus (USB) port 225 that provides the microcontroller the ability to communicate with other devices. Although a USB port 250 in Figure 2, any type of output port could be utilized by the remote control 200. For example, an infrared port, a serial port, a parallel port, or a universal hub could be incorporated to provide communication access between the microcontroller 225 and another device. From Figure 2 it should be understood that the components which comprise the remote control 200 as well as any of the alternative embodiments of the remote control device of the present invention may be physically located in any portion of the remote control.

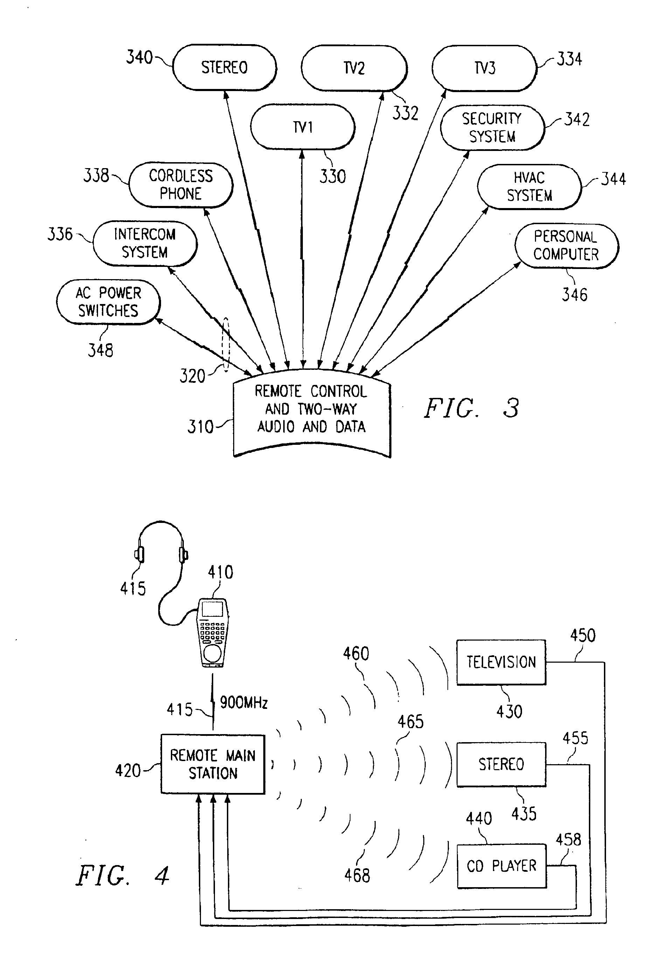

A single remote control may be used to control and communicate with more than one consumer electronic device. Figure 3 illustrates a remote control 310 in radio communication with a first television 330, a second television 332, a third television 334, an intercom system 336, a cordless phone 338, a stereo 340, a security system 342, a HVAC 344, a personal computer 346 and the power switches 348. Each of the televisions 330, 332, and 334 and systems 336, 338, 340, 342, 344, 346, and 348 in Figure 3 have within them transceivers which are compatible with the remote control 310 across an air interface via radio waves 320.

The remote control 410 may also communicate with consumer electronic devices which are not themselves compatible with the remote control device. Figure 4 illustrates a noncompatible television 430, a noncompatible stereo 435, and a noncompatible CD player 440 configured to communicate with a remote control device 410. The remote control 410 provides an audio output for headphones 415 which are connected to the headphone jack within the remote control device 410. Though the remote control device 410 communicates with a remote main station over an air interface via radio waves illustrated as a lightning strike 415, the remote main station 420 has a transmitter or transmitters capable of controlling prior art consumer electronic devices as well. For example, the remote main station 420 may have an infrared transmitter capable of sending infrared control messages to the television 430 via infrared waves 460, the stereo 435 via infrared waves 465, or the CD player 440 via radio waves 468. The television 430 has an audio output that is connected to the remote main station via an audio cable 450. Likewise, the stereo 435 has an audio cable 455 to carry an audio signal from the stereo 435 to the audio main station 420. Furthermore, the CD player 440 has an audio cable 458 for carrying audio signals from the CD player to the remote main station 420.

The remote main station 420 has a microprocessor in memory as well as a transceiver. The transceiver takes the audio signals from the audio cables 450, 455, and 458, and may transmit these audio signals to the remote control 410. The microprocessor within the remote main station 420 determines which audio signal is sent to the remote control 410 from the remote main station 420. Similarly, the microprocessor within the remote main station 420 will take a control signal received at the remote main station 420 from the remote control 410 and determine which device is to receive the command. Accordingly, a control command could be sent from the remote control 410 to the remote main station 420 where it is received by a transmitter and then sent to the microprocessor. The microprocessor would then determine that the command is a command intended for the television 430, and thus, sends the command to the infrared transmitter for transmission across the infrared transmission path 460 to the television 430.

Figure 5 illustrates a block flow diagram of one method of implementing an embodiment of the present invention as a remote reception algorithm 500 (the algorithm). The algorithm 500 begins with a transmission step 510 in which a consumer electronic device, such as a television, sends an audio signal from the consumer electronic device and into an air interface. The transmission step 510 may be accomplished using an infrared transmission or a radio wave transmission, for example. Next, in a remote reception step 520 the audio signal in the transmission step 510 is received at a remote control. Then, in an audio processing step 530, the audio signal is processed by the components of the remote control so that an audio signal is isolated or removed from any other signal which may be present with the audio signal. The audio signal is amplified and sent to a selected sound producing device, such as a speaker or an audio headset. Then, in a broadcast sound step 540, the audio signal is played as sound on the sound-producing device.

Because it is envisioned that the two-way radio frequency communication of an embodiment of the present invention may be practiced at or around 900 MHz to 999 MHz, it is foreseeable that such an embodiment of the present invention will be incorporated with a common cordless phone. Figure 6 illustrates an incoming call algorithm (the algorithm) 600. The algorithm 600 begins with a device on step 610 which simply encompasses turning on a consumer electronic device that is capable of communication (communicable) with a remote control. For purposes of the algorithm 600, it is assumed that the consumer electronic device is operating in that a user is remotely listening to an audio output from the consumer electronic device at the remote control.

Then, in a received call step 630, a telephone call is routed to the user's location, and some indication is made to the user that an incoming call is present, such as the ringing of a telephone. To make it easier for the user to listen to the telephone conversation and since, presumably, the user will no longer want to listen to the audio output from the consumer electronic device, the algorithm 600 proceeds to a mute step 630. In the mute step 630, the audio output from the consumer electronic device is received by the remote control; however, the microprocessor in the remote control terminates the audio output before it gets to the audio amplifier, thus, preventing any sound from being broadcast from the remote control. Then, the user proceeds to communicate with the person who called him or her in a conversation step 640.

Because the remote control device may communicate within the band width used by portable phones, it is conceivable that the telephone conversation will take place through the remote control. However, even if the conversation does not take place through the remote control, the remote control can detect (via the transceiver) whether a phone call is taking place or not. For example, if the telephone conversation is taking place on a portable telephone. The transceiver may detect the telephone transmission by detecting the transmission in the portable phone band width. Likewise, a telephone line may be connected directly into the consumer electronic device which is capable of communication with the remote control, or with the remote main station which is in communication with the remote control.

Eventually, the conversation will end and the user will hang up the telephone in an end conversation step 650. The remote control will detect the end of the conversation and the algorithm 600 will proceed to an unmute step 660. In the unmute step 660, the microprocessor allows the audio output received by the remote control to pass to the audio amplifier and then to the sound-producing device so that an audible sound can be heard by the user. Then, algorithm 600 proceeds to a continue step 670 in which an audio output from a consumer electronic device is received by a remote control across an air interface and audio output is broadcast as sound to a user of the remote control.

Though aspects of the invention has been described with respect to a specific preferred embodiment, many variations and modifications will become apparent to those skilled in the art upon reading the present application. It is therefore the intention that the appended claims be interpreted as broadly as possible in view of the prior art to include all such variations and modifications.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A remote control device that allows a user to adjust user settings in a consumer electronic device and to remotely listen to sounds, comprising:
a user interface;
a microcontroller coupled to the user interface;
a transceiver that is communicable with a consumer electronic device across an air interface, said transceiver coupled to the microcontroller; and
an audio amplifier coupled to the microcontroller.

2. The remote control device of Claim 1 wherein the transceiver operates at
a radio frequency.

3. The remote control device of claim 1 or 2, wherein the remote control device operates within a frequency band width of approximately 860 MHz to approximately 999 MHz.

4. The remote control device of claim 1 or 2, wherein the transceiver operates in an infrared frequency.

5. The remote control device of any preceding claim, wherein the user interface is a keypad.

6. The remote control device of any one of claims 1 to 4, wherein the user interface is a voice-recognition system.

7. The remote control device of any one of claims 1 to 4, wherein the user interface is a graphical user interface (GUI) having a touch screen.

8. The remote control device of any preceding claim, wherein the amplifier is coupled to an audio output headphone jack.

9. The remote control device of any preceding claim, further comprising a plurality of headphone jacks coupled to the audio amplifier.

10. The remote control device of any preceding claim, further comprising a speaker coupled to the audio amplifier.

11. The remote control device of any preceding claim, wherein the transceiver receives or is configured to receive a two-channel stereo signal.

12. The remote control device of any one of claims 1 to 10, wherein the transceiver receives or is configured to receive a four-channel stereo signal.

13. The remote control device of any preceding claim, further comprising a liquid crystal display (LCD) screen coupled to the transceiver.

14. The remote control device of any preceding claim, further comprising a video receiver that is coupled to a video display, and coupled to the transceiver.

15. The remote control device of any preceding claim, further comprising a microphone coupled to the transceiver.

16. The remote control device of any preceding claim, further comprising a security system control coupled to the microcontroller.

17. The remote control device of any preceding claim, further comprising a television control system coupled to the microcontroller.

18. The remote control device of any preceding claim, further comprising a stereo control system coupled to the microcontroller.

19. The remote control device of any preceding claim, further comprising a climate control system coupled to the microcontroller.

20. The remote control device of any preceding claim, further comprising a memory coupled to the'microcontroller.

21. The remote control device of any preceding claim, further comprising an input/output port coupled to the microcontroller.

22. A method of providing remote listening from a remote control device, the method comprising the steps of:
transmitting a first signal from a consumer electronic device to the remote control device across an air interface, the first signal having an audio component;
processing the first signal in the remote control device such that the audio component can be processed by an audio amplifier; and
broadcasting a sound from the remote control device.

23. A method of providing audio through 2-way radio transmissions between a remote control device and a consumer electronic device, comprising:
receiving a telephone transmission at the consumer electronic device;
transmitting telephone transmissions to. the remote control device; and
broadcasting the telephone transmission as audible audio for a user of the remote control device.

24. A method of providing audio through 2-way radio transmissions between a cordless telephone and a consumer electronic device, comprising:
receiving a telephone transmission at the consumer electronic device;
transmitting telephone transmissions to the cordless telephone; and
broadcasting the telephone transmission as audible audio for a user of the remote cordless telephone.

25. A method of providing a data transmission between a consumer electronic device and a remote control device comprising the steps of:
broadcasting a data transmission, having a data transmission information, from a consumer electronic device;
receiving the data transmission at the remote control device; and
displaying, on the remote control device, the data transmission information for a user of the remote control device.
